# EUROPÄISCHE PATENTSCHRIFT

(11) **EP 4 306 197 B1**
(45) Veröffentlichungstag und Bekanntmachung des Hinweises auf die Patenterteilung: **29.01.2025**
(21) Anmeldenummer: 23184638.7
(22) Anmeldetag: 11.07.2023
(51) Int. Cl.: B01D 46/00, B01D 46/121

(54) **FILTER MIT V-FÖRMIG ANGEORDNETEN FILTERMEDIENPAKETEN UND EINEM RAHMEN AUS VIER ELEMENTEN**
FILTER WITH V-SHAPED FILTER MEDIA PACKS AND A FRAME OF FOUR ELEMENTS
FILTRE COMPRENANT DES PAQUETS DE MILIEU FILTRANT DISPOSÉS EN V ET UN CADRE CONSTITUÉ DE QUATRE ÉLÉMENTS

(30) Priorität: 14.07.2022 DE 102022117650
(43) Veröffentlichungstag der Anmeldung: 17.01.2024
(73) Patentinhaber: Carl Freudenberg KG, 69469 Weinheim (DE)
(72) Erfinder: Schumacher, Sascha, 69483 Wald-Michelbach (DE); Tapper, Renate, 64625 Bensheim (DE); Weber, Patrick, 69469 Weinheim (DE); Schroth, Thomas, 67240 Bobenheim-Roxheim (DE)

(56) Entgegenhaltungen:
- WO-A1-2014/111162
- US-A1- 2015 224 434
- US-B1- 10 675 580
- US-B1- 6 955 696

## Beschreibung

Die Erfindung betrifft einen Kassettenfilter mit einer Mehrzahl von Filtermedienpaketen, wobei je zwei Filtermedienpakete v-förmig angeordnet sind, und mit einem Rahmen zur Aufnahme der Filtermedienpakete.

### Stand der Technik

In Gasturbinen, Kompressoren, Klima- und Lüftungsanlagen kommen unterschiedlichste Filter zur Reinigung von Zuluftströmen zum Einsatz, z.B. Kassettenfilter.

Aus der EP 3 831 461 A1 ist ein derartiger Kassettenfilter mit einer Mehrzahl von Filtermedienpaketen bekannt, wobei je zwei Filtermedienpakete v-förmig angeordnet sind und die Filtermedienpakete von einem Gas zu dessen Reinigung von einer Rohgasseite des Filters zu einer Reingasseite des Filters durchströmt werden. Solche Filter werden auch als V-Zellen-Filter bzw. im Englischen als V-Bank-Filter bezeichnet. Der Filter besitzt einen Rahmen zur Aufnahme der Filtermedienpakete mit Schutzgittern für das Filtermedium.

Nachteilig an diesem Filter ist der aufwändige Zusammenbau aus einer Mehrzahl von Einzelteilen.

Einen Filter mit einem ähnlichen Aufbau zeigt die US 2014 096 493 A1 und die US 6 955 696 B1.

In der US 10 675 580 B1 und der WO 2011 / 111 162 A1 sind V-Zellen-Filter gezeigt, deren Kopfrahmen aus einer Mehrzahl von einzelnen Traversen und zwei Holmen gebildet wird, wobei die Holmen Teil der Seitenplatten sind. US 2015 / 0 224 434 A1 und auch eine weitere Ausführungsform gemäß der WO 2011 / 111 162 A1 zeigen hingegen einen Aufbau mit einer einteiligen Kopfplatte.

Derartige Filter können schubladenartig in ein rechteckiges Schubfach einer Filteraufnahme eingeschoben werden. Mit Auflageflächen der Kopfplatte bzw. des Kopfrahmens liegt der Filter dann an der Filteraufnahme an und kann mit dieser verbunden werden, z.B. durch Verschrauben. Üblich ist, dass eine Filteraufnahme eine Mehrzahl von Fächern aufweist, um eine entsprechende Mehrzahl von Filtern aufnehmen zu können, welche dann matrixartig angeordnet sind und eine sogenannte Filterwand bilden. Auf die Bauteile des Filters wirkende Kräfte werden über die Kopfplatte bzw. den Kopfrahmen in die Filteraufnahme mit den Schubfächern und einer Trägerkonstruktion abgeleitet. Nachteilig bei diesen bekannten Filtern ist die aufwändige Gestaltung der Verbindung der Seitenplatten und der Kopfplatte mit Nasen und hervorstehenden Laschen. Weiter nachteilig ist eine gewisse Instabilität bzw. mangelnde Festigkeit des Filters.

### Aufgabenstellung

Aufgabe der vorliegenden Erfindung ist es einen Kassettenfilter zu schaffen, dessen Rahmen einen einfachen, stabilen und fertigungstechnisch günstigen Aufbau hat.

Weitere Aufgabe ist es, einen Kassettenfilter mit einem Rahmen zu schaffen, welcher auf den Filter wirkende Kräfte besonders wirksam in eine den Filter aufnehmende Filteraufnahme ableitet und die Seitenplatten mit der Kopfplatte gleichzeitig besonders sicher und montagetechnisch einfach verbindet. Weitere Aufgabe ist es, einen Kassettenfilter mit einem Rahmen zu schaffen, der eine optimierte Verbindungssicherheit und reduzierte Leckageanfälligkeit aufweist.

### Technische Lösung

Gelöst werden diese Aufgaben durch Kassettenfilter wie sie nachfolgend beschrieben und beansprucht sind.

Erfindungsgemäß wurde als vorteilhaft erkannt einen Kassettenfilter aus nur wenigen Elementen zu bilden, welche bei der Montage des Filters einfach miteinander verbunden werden können, einen guten Kraftfluss durch den Filter aufweisen und eine hohe Stabilität des Filters gewährleisten.

Die Erfindung betrifft einen Kassettenfilter mit einer Mehrzahl von Filtermedienpaketen, wobei je zwei Filtermedienpakete immer paarweise v-förmig in einem spitzen Winkel zueinander angeordnet sind, und mit einem Rahmen zur Aufnahme der Filtermedienpakete. Ein solcher Filter wird auch als V-Zellen-Filter bzw. im Englischen als V-Bank-Filter bezeichnet. Die Filtermedienpakete werden von einem Gas zu dessen Reinigung von einer Rohgasseite des Filters zu einer Reingasseite des Filters in einer Hauptdurchströmungsrichtung (kurz: Durchströmungsrichtung) durchströmt, insbesondere von Luft. Es kann der *Rahmen aus maximal vier Elementen, also aus nur vier Elementen* gebildet werden, welche jeweils einteilig ausgeführt sind, nämlich aus einer anströmseitigen Kopfplatte, einer abströmseitigen Fußplatte und zwei Seitenplatten. Ein solcher Rahmen hat in vorteilhafter Weise einen einfachen und fertigungstechnisch günstigen Aufbau.

Der Rahmen weist erfindungsgemäß einen *Kopfrahmen,* eine ggfs. segmentierte, abströmseitige Fußplatte und zwei Seitenplatten auf. Wenn die Fußplatte segmentiert ausgeführt ist, besteht sie aus mehreren Traversen. Dabei wird der Kopfrahmen erfindungsgemäß aus einer anströmseitigen, einteiligen Kopfplatte und aus Teilflächen der Seitenplatten gebildet. Der Kopfrahmen besitzt eine umlaufende rechteckige Einfassung und darin aufgenommene Traversen. Die umlaufende rechteckige Einfassung wird gebildet aus vier außenliegende Mantelflächen, welche nachfolgend als Außenflächen bezeichnet werden. Die Traversen können als Einzeltraversen und als Doppeltraversen ausgebildet sein. Bei Doppeltraversen ist je eine Traverse für ein jeweiliges Paar an v-förmig angeordneten Filtermedienpaketen vorgesehen. Bei Einzeltraversen ist je eine Traverse für ein Filtermedienpaket vorgesehen. Die Einfassung wird dabei zumindest durch in der Ebene des Kopfrahmens liegende Flächen der Kopfplatte gebildet. Dadurch wird eine hohe Stabilität des Kopfrahmens erreicht.

Insbesondere können zwei seitliche Außenflächen des Kopfrahmens von den Teilflächen der Seitenplatten gebildet werden. Es handelt sich dabei um sich gegenüberliegende Außenflächen des Kopfrahmens. Eine jeweilige Teilfläche liegt dabei in der Ebene der jeweiligen Seitenplatte bzw. in einer Ebene parallel dazu, sofern die jeweilige Seitenplatte im Bereich der Teilfläche einen Absatz aufweist und erhaben gegenüber der Ebene der Seitenfläche ist. Auf diese Weise lässt sich in vorteilhafter Weise Material am Kopfrahmen einsparen und eine einfache Verbindung von Kopfrahmen und Seitenteilen mit reduziertem Leckagerisiko und Gewicht des Filters realisieren.

In einer besonders vorteilhaften und daher bevorzugten Weiterbildung des Filters verfügt jede Seitenplatte über mindestens zwei Verbindungselemente und die Kopfplatte über mindestens je zwei zugeordnete komplementäre Gegenelemente, wobei Verbindungselemente und Gegenelemente ineinander einschiebbar ausgestaltet sind zur Herstellung eines Formschlusses von Verbindungselementen und Gegenelementen. Die mindestens zwei Verbindungselemente einer jeden Seitenplatte sind bevorzugt rechtwinklig zu den Teilflächen der Seitenplatten und zum Innern des Filters hin orientiert.

Es hat sich als vorteilhaft erwiesen, wenn Verbindungselemente und Gegenelemente in der Ebene des Kopfrahmens und damit senkrecht zur Durchströmungsrichtung orientiert sind. In der Durchströmungsrichtung liegt auch die Hauptkraftflussrichtung, in welcher die Kräfte im Filter wirken und von den Elementen des Filters aufgenommen werden müssen. Der Kraftfluss von betriebsbedingt auf den Filter wirkenden Kräften wirkt somit nicht primär in der Richtung in der Verbindungselemente und Gegenelemente orientiert sind. Dadurch kann die Gefahr reduziert werden, dass sich diese lösen. Sofern eine zusätzliche Verbindung durch Vergussmasse vorliegt, so ergeben die vorgenannten Vorteile auch, dass ein Aufbrechen und Lösen der Vergussmasse, zum Beispiel durch das systembedingt erforderliche Spiel zwischen Verbindungs- und Gegenelementen, verhindert werden kann.

Bei dieser Weiterbildung wird somit eine kompakte Bauweise bei gleichzeitig guter Stabilität des Filters erreicht.

In möglicher Ausgestaltung des Filters sind die Verbindungselemente als Zapfen und die Gegenelemente als die Zapfen aufnehmende Hülsen ausgeformt. Bei entsprechender Ausgestaltung kann auch eine Clipsverbindung realisiert werden.

In alternativer oder ergänzender Ausgestaltung des Filters sind die Verbindungselemente als ein Schloss bildende Riegel und die Gegenelemente als schlaufenartige Riegelaufnahmen ausgebildet.

In Weiterbildung des Kassettenfilters wird der Rahmen von einer anströmseitigen Kopfplatte, zwei Seitenplatten und einer *einteiligen, abströmseitigen Fußplatte* gebildet. Ein solcher Rahmen hat in vorteilhafter Weise einen einfachen und fertigungstechnisch günstigen Aufbau.

In einer besonders vorteilhaften und daher bevorzugten Weiterbildung des Filters besitzt die einteilige Fußplatte Traversen, wobei je eine Traverse für ein jeweiliges Paar an v-förmig angeordneten Filtermedienpaketen vorgesehen ist, und deshalb als Doppeltraverse bezeichnet werden kann. Eine Traverse ist mit der jeweiligen nächsten Traverse über Stege oder über mindestens einen durchgehenden Steg verbunden. Die Stege oder der durchgehende Steg können z.B. beabstandet zu den Enden und mittig der Traversen angeordnet sein. In einer auf Grund ihrer höheren Stabilität besonders bevorzugten Ausführungsform ist eine Traverse an ihren beiden Enden mit der jeweiligen nächsten Traverse über Stege oder über je einen durchgehenden Steg verbunden, sodass die Fußplatte eine leiterförmige Grundform aufweist.

Weiter vorteilhaft ist es, wenn in den Seitenplatten Ausnehmungen vorgesehen sind zur formschlüssigen Aufnahme von Endabschnitten der Traversen, z.B. taschenförmige Ausnehmungen zur Aufnahme von laschenförmigen Endabschnitten, welche eine Steckverbindung ermöglichen. Bei entsprechender Passungswahl kann die Steckverbindung als Klemmverbindung realisiert werden. Insbesondere sind die Ausnehmungen derart rechtwinklig zur Durchströmungsrichtung ausgerichtet, dass Traversen und Seitenplatten rechtwinklig zur Durchströmungsrichtung ineinandergefügt sind. So kann eine besonders hohe Verbindungssicherheit von der Fußplatte und den Seitenplatten erreicht werden. Zusätzlich können Rastelemente vorgesehen sein zum Verrasten von Fußplatte und Seitenplatten.

In einem alternativen, nicht erfindungsgemäßen Kassettenfilter mit einer Mehrzahl von Filtermedienpaketen sind je zwei Filtermedienpakete v-förmig angeordnet, und mit einem Rahmen zur Aufnahme der Filtermedienpakete, insbesondere mit einem Aufbau wie vorstehend beschrieben. Der Rahmen wird von einer anströmseitigen Kopfplatte, zwei Seitenplatten und einer abströmseitigen Fußplatte gebildet und die Kopfplatte und die Fußplatte weisen plattenförmige Traversen auf, welche sich von einer Seitenplatte zur anderen erstrecken. Kopfplatte und Fußplatte können einteilig oder segmentiert ausgeführt sein.

Es sind die Filtermedienpakete an ihren Endflächen, auch als liegende Falten bezeichnet, stoffschlüssig durch Verguss mit einer Vergussmasse mit den Traversen verbunden. Um einen gleichzeitig materialsparenden und sicheren Verguss zu erreichen, weisen die zur Innenseite des Filters gerichteten Innenflächen der Traversen jeweils eine *vergussoptimierte Topographie* mit erhabenen und/oder vertieften Bereichen auf.

Die vorstehend beschriebenen Filter können zusätzlich Schutzgitter besitzen, welche an einem jeweiligen Filtermedienpaket reingasseitig angeordnet und mit dem Rahmen verbunden sind und eine Berstschutzfunktion gewährleisten. Die Verbindung kann durch Verguss erfolgen.

Die vergussoptimierten Topographien der Innenflächen der Traversen können insbesondere folgende Merkmale aufweisen:
- muschelförmige oder zylinderscheibenförmige Erhöhungen zur Reduzierung der erforderlichen Menge und schnelleren Verteilung des Vergussmaterials und/oder
- in den Randbereich der Traversen führende Vergusskanäle zum Vergießen von Schutzgittern, welche die Filtermedienpakete abdecken, sodass die Schutzgitter rein stoffschlüssig mit den Traversen verbunden werden können und keine zusätzlichen form- oder kraftschlüssigen Verbindungselemente erforderlich werden und/oder
- Fließkanäle zur schnellen und flächigen Verteilung von Vergussmaterial über der Innenfläche der Traversen und/oder
- aus schwertförmigen Einzelrippen gebildete Positionierelemente als Positionierhilfen für die Filtermedienpakete, welche die Verteilung der Vergussmasse nicht behindern.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter beispielhafter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1 a und b: einen Filter in zwei Ansichten
- Fig. 2: eine Explosionsdarstellung eines Filters
- Fig. 3: eine einteilige Kopfplatte eines Filters
- Fig. 4 a und b: die Anbindung der Seitenplatte an die Kopfplatte in einem Detailausschnitt und einem Detailschnitt
- Fig. 5: eine einteilige Fußplatte eines Filters
- Fig. 6a und b: die vergusstechnisch optimierte Ausgestaltung der Traverse eines Filters in Detailausschnitten

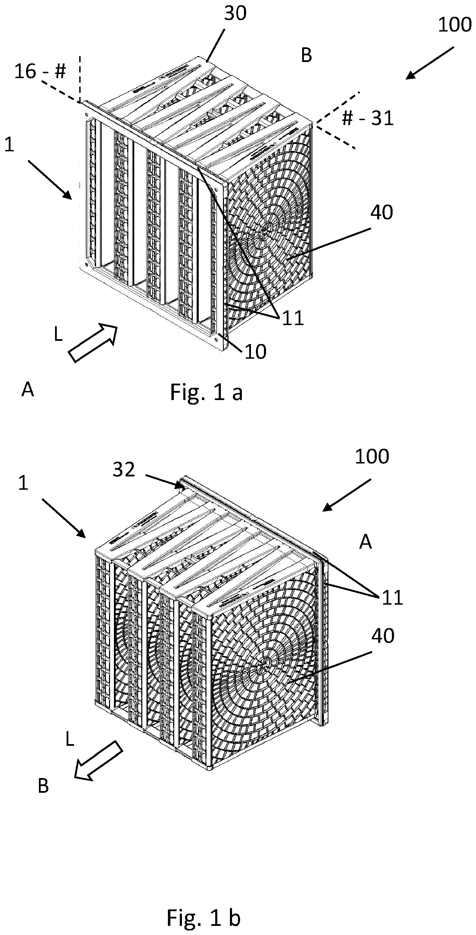

Fig. 1 a und b zeigen einen erfindungsgemäßen Kassettenfilter 100 in zwei perspektivischen Ansichten.

Der Kassettenfilter 100 besitzt acht Filtermedienpakete 2 welche aus plissiertem Filtermedium gebildet sein können. Je zwei Filtermedienpakete 2 sind immer paarweise v-förmig in einem spitzen Winkel zueinander angeordnet. Die Filtermedienpakete 2 werden von einem Gas zu dessen Reinigung von einer Rohgasseite A des Filters 100 zu einer Reingasseite B des Filters 100 in Durchströmungsrichtung L durchströmt.

Fig. 1a zeigt den Filter 100 von der Rohgasseite A und Fig. 1b von der Reingasseite B.

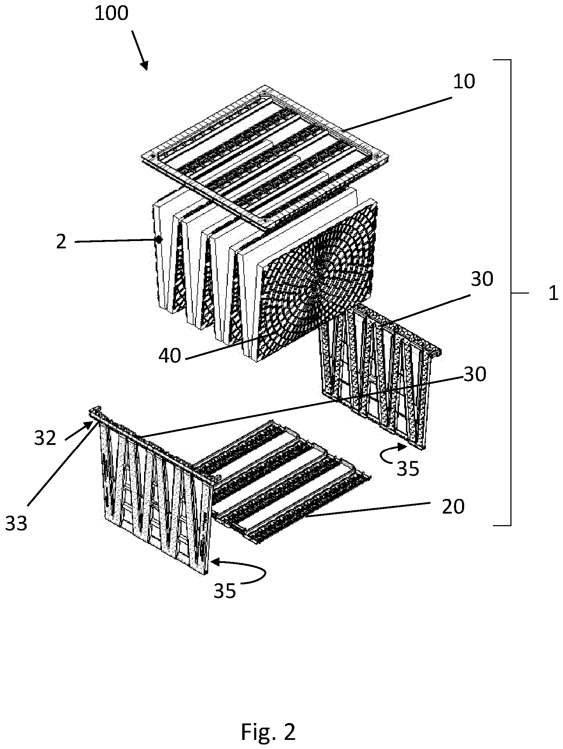

Zur Aufnahme der Filtermedienpakete 2 ist ein Rahmen 1 vorgesehen. Der Aufbau des Rahmens 1 ergibt sich näher aus Fig. 2. In Fig. 1a ist die Ebene 16 angedeutet, in welcher sich der Kopfrahmen befindet und die Ebene 31, in welcher sich die (im Bild oben liegende) Seitenplatte 30 befindet. Aus Fig. 1b ergibt sich, dass die Seitenplatten 30 in dem Bereich, in dem sie mit der Kopfplatte 10 verbunden sind, einen Absatz 32 aufweisen.

Je ein Schutzgitter 40 ist reingasseitig (A) an einem jeweiligen Filtermedienpaket 2 angeordnet. Durch die Schutzgitter 40 wird das Filtermedium der Filtermedienpakete 2 in ihrer Position gehalten, vor Beeinträchtigung geschützt und nachfolgende Anlagen vor Beschädigung bewahrt. **In** der dargestellten Ausführungsform ist ein jeweiliges Schutzgitter 40 einteilig als Spritzgussteil ausgebildet und an seinem umlaufenden Rand im Bereich einer Randstrebe stoffschlüssig mit dem Rahmen 1 verbunden, z.B. vergossen.

Die vier Außenflächen, welche Teil des Kopfrahmens 11 sind, und die Form einer umlaufenden rechteckigen Einfassung bilden, sind durch die Linien des Bezugszeichens 11 angegeben.

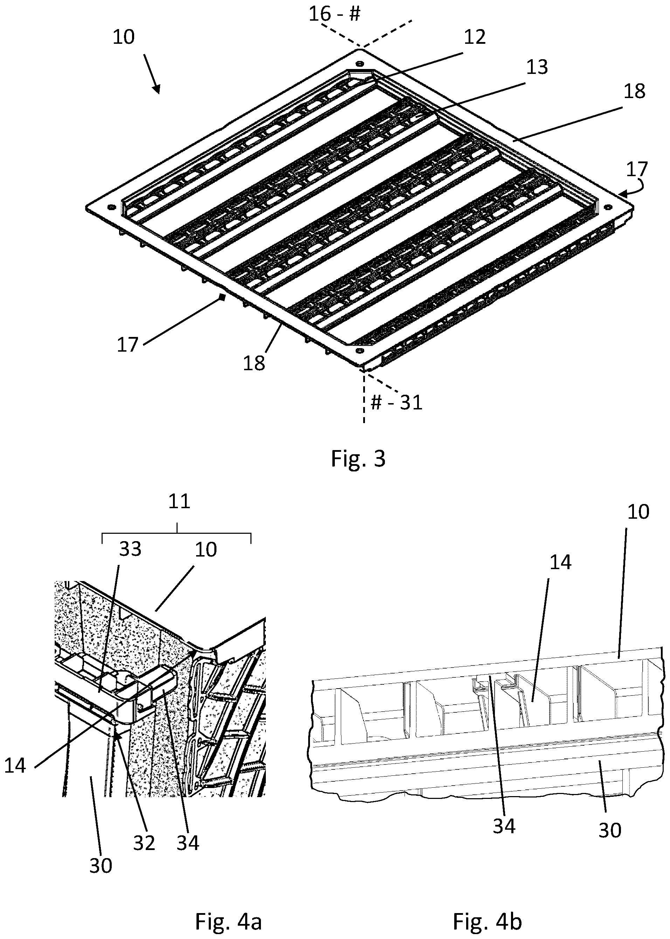

Fig. 2 zeigt eine Explosionsdarstellung eines Kassettenfilters 100 in einer möglichen erfindungsgemäßen Ausführung und den Aufbau des Rahmens 1. Der Rahmen 1 besitzt eine Kopfplatte 10 mit mehreren Traversen 12, 13 und eine parallel dazu angeordnete Fußplatte 20 mit mehreren Traversen 23 sowie dazwischen und senkrecht dazu angeordnete Seitenplatten 30. In den Seitenplatten 30 sind Ausnehmungen 35 vorgesehen, in welche an der Fußplatte 20 befindliche Elemente eingreifen können, zur Realisierung einer formschlüssigen Verbindung. In den Seitenplatten 30 sind auch Verbindungselemente 34 vorgesehen, welche sich mit an der Kopfplatte 10 befindlichen Gegenelemente formschlüssig verbinden lassen (vgl. Fig. 4a und b). Die Filtermedienpakete 2 sind zwischen Kopfplatte 10, Fußplatte 20 und Seitenplatten 30 angeordnet und im Rahmen 1 aufgenommen. Im dargestellten Ausführungsbeispiel sind die Kopfplatte 10 und die Fußplatte 20 und die Seitenplatten 30 einteilig ausgebildet. In alternativen, nicht dargestellten Ausführungen können die Platten 10, 20, 30 auch teilweise segmentiert und mehrteilig ausgestaltet sein.

Der Filter 100 kann schubladenartig in ein rechteckiges Schubfach einer Filteraufnahme eingeschoben werden (nicht dargestellt). Mit Auflageflächen der Kopfplatte 10 bzw. des Kopfrahmen 11 liegt der Filter 100 dann an der Filteraufnahme an und kann mit dieser verbunden werden, z.B. durch Verschrauben. Auch möglich ist, dass eine Filteraufnahme eine Mehrzahl von Fächern aufweist, um eine entsprechende Mehrzahl von Filtern 100 aufnehmen zu können, welche dann matrixartig angeordnet sind und eine sogenannte Filterwand bilden.

Fig. 3 zeigt eine einteilige Kopfplatte 10 eines Filters 100, wie sie in den Filtern 100 gemäß der Figuren 1a, b und 2 verwendet wird. Diese besitzt leiterartig angeordnete Traversen, nämlich zwei außenliegende Einzeltraversen 12 und innenliegende Doppeltraversen 13. Die Traversen 12, 13 sind über durchgehende Holmen 18 miteinander verbunden. Die Einzeltraversen 12 und die Holmen 18 bilden eine umlaufende rechteckige Einfassung in welcher die Doppeltraversen 13 aufgenommen sind. Die Einfassung wird dabei zumindest durch in der Ebene 16 des Kopfrahmens 11 liegende Flächen der Kopfplatte 10 gebildet. Dadurch wird eine hohe Stabilität des Kopfrahmens 11 erreicht.

Die Kopfplatte 10 besitzt keine außen durchgehende umlaufende Fläche, sondern es fehlen zwei Seitenflächen, welche mit der Position 17 markiert sind, hat also nicht die Ausgestaltung eines Rahmens.

Der Kopfrahmen 11 des Filters 100, welcher der Aufnahme in einer Filteraufnahme dient (nicht dargestellt), wird aus dieser Kopfplatte 10 und aus Teilflächen 33 der Seitenplatten 30 zusammengesetzt, die nach erfolgtem Zusammenbau des Filters 100 die fehlenden Seitenflächen 17 bilden, wie dies in Fig. 4a näher dargestellt ist.

Die seitlichen Außenflächen des Kopfrahmens 11 in der Ebene 31 der Seitenplatten 30 oder parallel dazu werden also von den Teilflächen 33 der Seitenplatten 30 gebildet.

Fig. 4 a und b zeigen die Anbindung der Seitenplatten 30 an die Kopfplatte 10 in Detailausschnitten. Beide Abbildungen zeigen den Prozess des Zusammenbaus und nicht den fertig montierten Filter 100.

Wie bereits anhand der Fig. 3 erläutert und in Fig. 4a dargestellt, werden die seitlichen Außenflächen des Kopfrahmens 11 von den Teilflächen 33 der Seitenplatten 30 gebildet. Die Teilflächen 33 sind erhaben gegenüber der Ebene 31 der jeweiligen Seitenplatte 30. Dadurch wird ein Absatz 32 und damit eine Auflagefläche des Filters 100 zum Kontakt mit einer Gegenfläche einer Filteraufnahme (nicht dargestellt) geschaffen.

Jede Seitenplatte 30 verfügt über mindestens zwei Verbindungselemente 34 und die Kopfplatte 10 über komplementäre Gegenelemente 14, welche ineinander einschiebbar ausgestaltet sind und eine formschlüssige Verbindung von einer jeweiligen Seitenplatte 30 mit der Kopfplatte 10 ermöglichen.

Die Verbindungselemente 34 und Gegenelemente 14 sind in der Ebene des Kopfrahmens 11 orientiert, sodass die Montagerichtung im rechten Winkel zur Durchströmungsrichtung L liegt.

Die Verbindungselemente 34 können wie in Fig. 4a gezeigt als Zapfen und die Gegenelemente 14 als die Zapfen aufnehmende Hülsen ausgeformt sein.

Die Verbindungselemente 34 und Gegenelemente 14 können auch als ein Schloss bildende Riegel und schlaufenartige Riegelaufnahmen ausgebildet sein, wie dies in Fig. 4b dargestellt ist. Auch können beide Varianten miteinander kombiniert werden, um eine noch sicherere Verbindung von einer jeweiligen Seitenplatte 30 mit der Kopfplatte 10 zu gewährleisten.

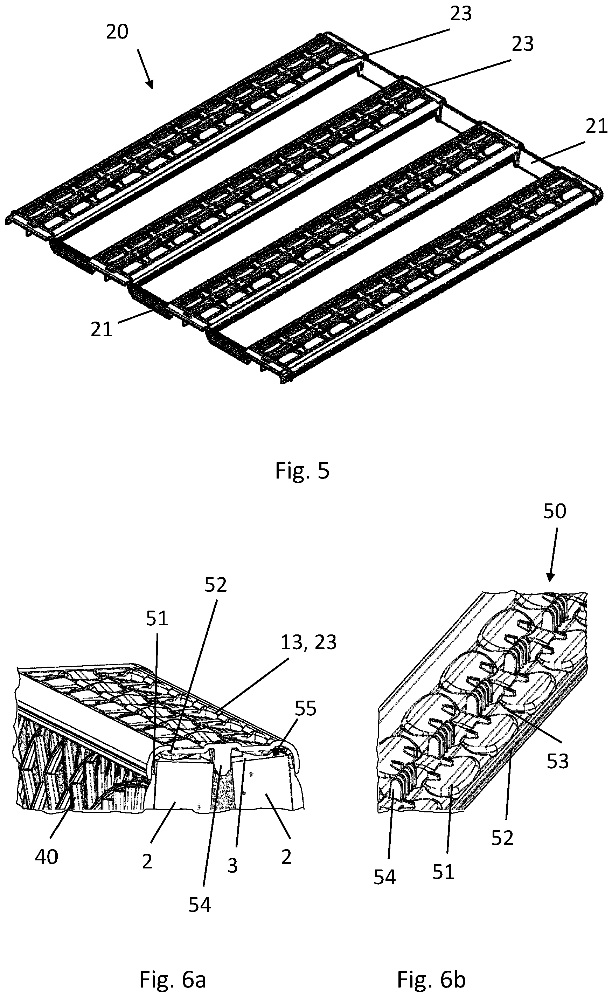

Fig. 5 zeigt eine einteilige Fußplatte 20 eines Filters 100, wie sie in den Filtern 100 gemäß der Figuren 1a, b und 2 verwendet wird. Die einteilige Fußplatte 20 besitzt Traversen 23, wobei je eine Doppeltraverse 23 für die Verbindung mit einem jeweiligen Paar an v-förmig angeordneten Filtermedienpaketen 2 vorgesehen ist, und eine Traverse 23 mit der jeweiligen nächsten Traverse 23 an ihren Enden über Stege 21 verbunden ist.

Wie in Fig. 2 angedeutet sind in den Seitenplatten 30 Ausnehmungen 35 vorgesehen zur formschlüssigen Aufnahme von Endabschnitten der Traversen 23 der Fußplatte 20 und erlauben so eine formschlüssige Verbindung von Seitenplatten 30 und Fußplatte 20.

Fig. 6a und b zeigen die vergusstechnisch optimierte Ausgestaltung der Traversen 13, 23 von Kopfplatte 10 und Fußplatte 20 eines Filters 100 in Detailausschnitten am Beispiel einer Doppeltraverse. Auch Einzeltraversen 12 der Kopfplatte 10 können entsprechend eine vergusstechnisch optimierte Ausgestaltung aufweisen. Fig. 6a zeigt einen Schnitt durch ein Paar von Filtermedienpaketen 2 und die zugeordnete Doppeltraverse 13, 23. Fig. 6b zeigt eine Ansicht auf dieselbe Doppeltraverse 13, 23 aus dem Inneren des Filters 100, für eine bessere Übersichtlichkeit unter Weglassung aller weiterer Elemente des Filters 100.

Filtermedienpakete 2 sind and ihren Endflächen 3 stoffschlüssig mit den Traversen 12, 13, 23 durch Vergussmasse 55 (nicht dargestellt) verbunden und werden so in dem Rahmen 1 des Filters 100 fixiert. Wie in Figur 6a und 6b dargestellt weisen die zur Innenseite des Filters 100 gerichteten Innenflächen 50 der Traversen 12, 13, 23 jeweils eine vergussoptimierte Topographie mit folgenden Merkmalen auf:
- muschelförmige oder zylinderscheibenförmige Erhöhungen 51
- in den Randbereich der Traversen führende Vergusskanäle 52 zum Vergießen von Schutzgittern 40, welche die Filtermedienpakete 2 abdecken
- Fließkanäle 53 zur schnellen und flächigen Verteilung von Vergussmaterial über der Innenfläche 50 der Traversen 12, 13, 23
- aus mehreren gruppierten Einzelrippen 54 gebildete Positionierelemente als Positionierhilfen für die Filtermedienpakete 2, wobei Vergussmasse zwischen den Einzelrippen 54 hindurchfließen kann.

In alternativen, nicht dargestellten Ausführungsformen können die Innenflächen 50 auch nur einzelne der vorgenannten Merkmale aufweisen. Bei Einzeltraversen 12 der Kopfplatte 10 wird in der Regel auf schwertförmige Einzelrippen 54 verzichtet.

## Patentansprüche

1. Kassettenfilter (100), mit einer Mehrzahl von Filtermedienpaketen (2), wobei je zwei Filtermedienpakete (2) v-förmig angeordnet sind und mit einem Rahmen (1) zur Aufnahme der Filtermedienpakete (2), **dadurch gekennzeichnet, dass**
der Rahmen (1) einen *Kopfrahmen (11),* eine abströmseitige Fußplatte (20) und zwei Seitenplatten (30) aufweist, und dass der Kopfrahmen (11) aus einer anströmseitigen, einteiligen Kopfplatte (10) und aus Teilflächen (33) der Seitenplatten (30) gebildet wird.

2. Kassettenfilter nach Anspruch 1, **dadurch gekennzeichnet, dass** seitliche Außenflächen des Kopfrahmens (11) von den Teilflächen (33) der Seitenplatten (30) gebildet werden.

3. Kassettenfilter nach Anspruch 1 oder 2, **dadurch gekennzeichnet, dass** jede Seitenplatte (30) über mindestens zwei Verbindungselemente (34) und die Kopfplatte (10) über mindestens je zwei komplementäre Gegenelemente (14) verfügt und, dass Verbindungselemente (34) und Gegenelemente (14) ineinander einschiebbar ausgestaltet sind.

4. Kassettenfilter nach Anspruch 3, **dadurch gekennzeichnet, dass** Verbindungselemente (34) und Gegenelemente (14) in der Ebene des Kopfrahmens (11) orientiert sind.

5. Kassettenfilter nach Anspruch 3 oder 4, **dadurch gekennzeichnet, dass** die Verbindungselemente (34) als Zapfen und die Gegenelemente (14) als die Zapfen aufnehmende Hülsen ausgeformt sind.

6. Kassettenfilter nach Anspruch 3 oder 4, **dadurch gekennzeichnet, dass** Verbindungselemente (34) und Gegenelemente (14) als ein Schloss bildende Riegel und schlaufenartige Riegelaufnahmen ausgebildet sind.

7. Kassettenfilter (100) nach einem der vorangehenden Ansprüche,
**dadurch gekennzeichnet, dass**
der Rahmen (1) von einer anströmseitigen Kopfplatte (10), zwei Seitenplatten (30) und einer einteiligen, abströmseitigen *Fußplatte* (20) gebildet wird.

8. Kassettenfilter nach Anspruch 7, **dadurch gekennzeichnet, dass** die einteilige Fußplatte (20) Traversen (23) besitzt, wobei je eine Traverse (23) für ein jeweiliges Paar an v-förmig angeordneten Filtermedienpaketen (2) vorgesehen ist, und eine Traverse (23) mit der jeweiligen nächsten Traverse (23) über mindestens einen Steg (21) verbunden ist.

9. Kassettenfilter nach Anspruch 7 oder 8, **dadurch gekennzeichnet, dass** in den Seitenplatten (30) Ausnehmungen (35) vorgesehen sind zur formschlüssigen Aufnahme von Endabschnitten der Traversen (23) der Fußplatte (20).

10. Kassettenfilter nach einem der vorangehenden Ansprüche, **dadurch gekennzeichnet, dass**
der Filter zusätzlich Schutzgitter (40) besitzt, welche an einem jeweiligen Filtermedienpaket (2) angeordnet sind.

## Claims

1. Cartridge filter (100) having a plurality of filter media sets (2), wherein two filter media sets (2) are arranged in a V-shaped manner in each case, and having a frame (1) for receiving the filter media sets (2), **characterized in that**
the frame (1) has an upper frame (11), an outflow-side base plate (20) and two side plates (30), and **in that** the upper frame (11) is formed from an inflow-side single-piece upper plate (10) and part-faces (33) of the side plates (30).

2. Cartridge filter according to Claim 1, **characterized in that**
lateral outer faces of the upper frame (11) are formed by the part-faces (33) of the side plates (30).

3. Cartridge filter according to Claim 1 or 2, **characterized in that**
each side plate (30) has at least two connection elements (34) and the upper plate (10) has in each case at least two complementary counter-elements (14), and **in that** the connection elements (34) and counter-elements (14) are configured to be able to be pushed one into the other.

4. Cartridge filter according to Claim 3, **characterized in that**
connection elements (34) and counter-elements (14) are orientated in the plane of the upper frame (11).

5. Cartridge filter according to Claim 3 or 4, **characterized in that**
the connection elements (34) are in the form of journals and the counter-elements (14) are in the form of sleeves which receive the journals.

6. Cartridge filter according to Claim 3 or 4, **characterized in that**
the connection elements (34) and counter-elements (14) are in the form of a bar which forms a lock and loop-like bar receiving members, respectively.

7. Cartridge filter (100) according to any one of the preceding claims, **characterized in that**
the frame (1) is formed by an inflow-side upper plate (10), two side plates (30) and a single-piece, outflow-side base plate (20).

8. Cartridge filter according to Claim 7, **characterized in that**
the single-piece base plate (20) has cross-members (23), wherein a cross-member (23) is provided in each case for a respective pair of filter media sets (2) which are arranged in a V-shaped manner and a cross-member (23) is connected to the respective next cross-member (23) by means of at least one web (21).

9. Cartridge filter according to Claim 7 or 8, **characterized in that**
recesses (35) are provided in the side plates (30) for the positive-locking receiving of end portions of the cross-members (23) of the base plate (20).

10. Cartridge filter according to any one of the preceding claims, **characterized in that**
the filter additionally has protective grids (40) which are arranged on a respective filter media set (2).

## Revendications

1. Filtre à cassette (100), comportant une pluralité de paquets de milieu filtrant (2), deux paquets de milieu filtrant (2) étant respectivement disposés en forme de V, et comportant un cadre (1) servant à la réception des paquets de milieu filtrant (2), **caractérisé en ce que** le cadre (1) présente un cadre de tête (11), une plaque de base (20) côté sortie d'écoulement et deux plaques latérales (30), et **en ce que** le cadre de tête (11) est formé à partir d'une plaque de tête (10) d'un seul tenant, côté entrée d'écoulement, et à partir de surfaces partielles (33) des plaques latérales (30).

2. Filtre à cassette selon la revendication 1, **caractérisé en ce que** les surfaces extérieures latérales du cadre de tête (11) sont formées par les surfaces partielles (33) des plaques latérales (30).

3. Filtre à cassette selon la revendication 1 ou 2, **caractérisé en ce que** chaque plaque latérale (30) possède au moins deux éléments de liaison (34) et la plaque de tête (10) possède au moins deux éléments conjugués (14) complémentaires respectifs, et **en ce que** les éléments de liaison (34) et les éléments conjugués (14) sont configurés de manière à pouvoir être insérés les uns dans les autres.

4. Filtre à cassette selon la revendication 3, **caractérisé en ce que** les éléments de liaison (34) et les éléments conjugués (14) sont orientés dans le plan du cadre de tête (11).

5. Filtre à cassette selon la revendication 3 ou 4, **caractérisé en ce que** les éléments de liaison (34) sont formés comme des tourillons et les éléments conjugués (14) sont formés comme des douilles recevant les tourillons.

6. Filtre à cassette selon la revendication 3 ou 4, **caractérisé en ce que** les éléments de liaison (34) et les éléments conjugués (14) sont réalisés sous la forme d'une barre formant un verrou et sous la forme de logements de barres en forme de boucles.

7. Filtre à cassette (100) selon l'une des revendications précédentes, **caractérisé en ce que** le cadre (1) est formé par une plaque de tête (10) côté entrée d'écoulement, deux plaques latérales (30) et une plaque de base (20) d'un seul tenant, côté sortie d'écoulement.

8. Filtre à cassette selon la revendication 7, **caractérisé en ce que** la plaque de base (20) d'un seul tenant comporte des traverses (23), une traverse (23) respective étant prévue pour une paire respective de paquets de milieu filtrant (2) disposés en forme de V, et une traverse (23) étant reliée à la traverse (23) suivante respective par le biais d'au moins une nervure (21).

9. Filtre à cassette selon la revendication 7 ou 8, **caractérisé en ce que** des évidements (35) sont prévus dans les plaques latérales (30) pour la réception avec complémentarité de formes de portions d'extrémité des traverses (23) de la plaque de base (20).

10. Filtre à cassette selon l'une des revendications précédentes, **caractérisé en ce que**
le filtre comporte des grilles de protection (40) supplémentaires, lesquelles
s sont disposées sur un paquet de milieu filtrant (2) respectif.
